# EUROPEAN PATENT APPLICATION

(11) **EP 1 574 792 A2**
(43) Date of publication of application: **14.09.2005**
(21) Application number: 05075564.4
(22) Date of filing: 08.03.2005
(51) Int. Cl.: F24J 2/24, F24J 2/52

(54) **solar collector**

(30) Priority: 11.03.2004 NL 1025699
(71) Applicant: R & R Systems B.V., 5422 VV, Gemert (NL)
(72) Inventor: Claesen, Robertus Maria, 5427 PW Boekel (NL)
(74) Representative: Valkonet, Rutger

(57) **Abstract**

A solar collector (1) is provided with a number of plate-shaped panels (3), which panels (3) each comprise a plurality of flow channels (9) arranged in parallel, side-by-side relationship, which open into a fluid inlet chamber (11) with first ends (10) and which open into a fluid outlet chamber (15) with second ends. The fluid inlet chamber (11) and the fluid outlet chamber (15) are provided with connecting elements (17,18) for connection to a fluid supply device and a fluid discharge device. The solar collector (1) is furthermore provided with at least one holder (2), in which the panels (3) can be detachably mounted, which panels (3) can be detachably interconnected in fluid communication with each other.

## Description

The invention relates to a solar collector provided with a number of plate-shaped panels, which panels each comprise a plurality of flow channels arranged in parallel, side-by-side relationship, which open into a fluid inlet chamber with first ends and which open into a fluid outlet chamber with second ends, said fluid inlet chamber and said fluid outlet chamber being provided with connecting elements for connection to a fluid supply device and a fluid discharge device.

With such a device, which is known from EP-A2-1 134 512, plate-shaped panels are permanently installed in a roof construction. Using the solar collector, heat from the sun is utilized for heating the fluid present in the flow channels.

At various locations where people would like to use solar collectors, a roof in which such solar collectors can be permanently installed is not available, or it is considered undesirable to mar the appearance of the roof permanently by the installation of a solar collector.

The object of the invention is to provide a solar collector which can readily be installed at practically any location.

This object is accomplished with the solar collector according to the invention in that the solar collector is furthermore provided with at least one holder comprising a number of slots extending parallel to each other, in each of which a panel can be detachably mounted, which panels can be detachably interconnected in fluid communication with each other.

Since the solar collector comprises detachable panels and at least one holder provided with slots, the solar collector can readily be installed on any terrace roof or any supporting surface by means of the holder. The solar collector can be disassembled after use by removing the panels from the slots in the holder and subsequently be used elsewhere or be stored for future use.

In this way a solar collector has been obtained which is suitable for being installed beside a swimming pool, for example, which solar collector can be used during periods when there is comparatively much sunshine, for example in the spring and in the summer, whilst the solar collector can be removed during periods when there is less sunshine, so that the space taken up by the solar collector can be used for other purposes and the solar collector does not obstruct the view. In very sunny regions, the use of a solar collector for heating swimming pools is in particular desirable in the spring, because the water in the swimming pool is comparatively cold and cools down comparatively quickly in that period. As soon as the water in the swimming pool has reached a desired temperature, the solar collector can be demounted, for example, and be stored for future use. In this way it is possible to use the removable solar collector alternately at various swimming pools or for different uses.

The holder is comparatively easy to manufacture, and because of the presence of the parallel slots the panels can readily be arranged in parallel relationship.

Moreover, the holder can be positioned on a supporting surface in such a manner that an optimum position with respect to the sun is obtained so as to achieve a maximum heat transfer.

One embodiment of the solar collector according to the invention is characterized in that the slots extend at an angle with respect to a bottom side of the holder.

Said angle is preferably selected with a view to obtaining an optimum heat transfer for the desired application.

Another embodiment of the solar collector according to the invention is characterized in that the panels are interconnected in fluid communication by means of hoses, which hoses are connected to the panels by means of detachable connections.

The hoses make it possible to realise a detachable fluid connection between the panels in a simple manner.

Yet another embodiment of the solar collector according to the invention is characterized in that the solar collector is provided with at least one adjusting mechanism, by means of which the distance between one end of the holder and a supporting surface is adjustable.

The adjusting mechanism, which may comprise an adjusting plate provided with a number of adjusting holes, for example, makes it possible to adjust the distance between one end of the holder and the supporting surface, as a result of which also the angle that the holder includes with the supporting surface is adjustable. In this way the angle that the panels include with the supporting surface is changed as well. This makes it possible to realise a desired adjustment of the holder with respect to the supporting surface in dependence on the location at which the solar collector is used and in dependence on the path of the sun during the period in question.

Yet another embodiment of the solar collector according to the invention is characterized in that the holder comprises an elongated plate provided with V-shaped recesses, which plate is folded about a fold line that extends through points of the V-shaped recesses, said recesses forming slots in which the panels can be detachably mounted.

Such a holder is relatively simple to manufacture, and a desired angle of the panels with respect to a supporting surface can be realised in dependence on the angle between the legs of the V-shaped recesses and the angle through which the plate is folded about the fold line.

The invention will now be explained in more detail with reference to the drawings, in which:
Figs. 1A-1C are a front view and side views of a solar collector according to the invention;
Fig. 2 shows a cross slat of the solar collector that is shown in Figs. 1A-1C;
Fig. 3 shows a support of the solar collector that is shown in Figs. 1A-1C;
Fig. 4 shows a locking bar of the solar collector that is shown in Figs. 1A-1C;
Figs. 5A and 5B are a front view and a side view of a stiffening section of the solar collector that is shown in Figs. 1A-1C;
Figs. 6A and 6B are a front view and a top plan view of a plate-shaped panel of the solar collector that is shown in Figs. 1A-1C;
Figs. 7A-7C are a plan view and side views of a holder of the solar collector that is shown in Figs. 1A-1C;
Figs. 8A and 8B are a front view and a side view of an adjusting plate of the solar collector that is shown in Figs. 1A-1C;
Fig. 9 shows an application of the solar collector that is shown in Figs. 1A-1C.

Like parts are indicated by the same numerals in the figures.

The solar collector 1 according to the invention comprises two holders 2 as well as a number of panels 3 supported by the holders 2.

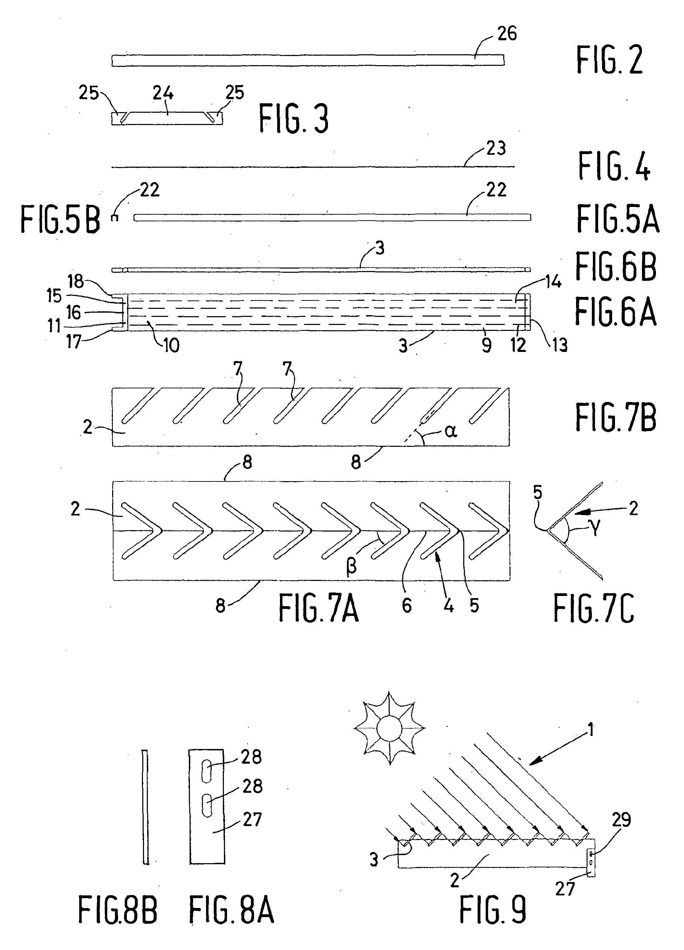

The holder 2 is made of a metal plate in which V-shaped recesses 4 are present, as is shown in Fig. 7A. A fold line 6 extends through the points 5 of the V-shaped recesses, about which fold line the plate has been folded to the position that is shown in Fig. 7C. Slots 7 extending parallel to each other have been formed in the plate 2 (see Fig. 7B). The magnitude of the angle α between the slots 7 and an edge 8 extending parallel to the fold lines 6 depends on the magnitude of the angle β between a leg of the V-shaped recesses 4 and the fold line 6 as well as on the magnitude of the angle γ between the parts of the plate that are present on either side of the fold line 6.

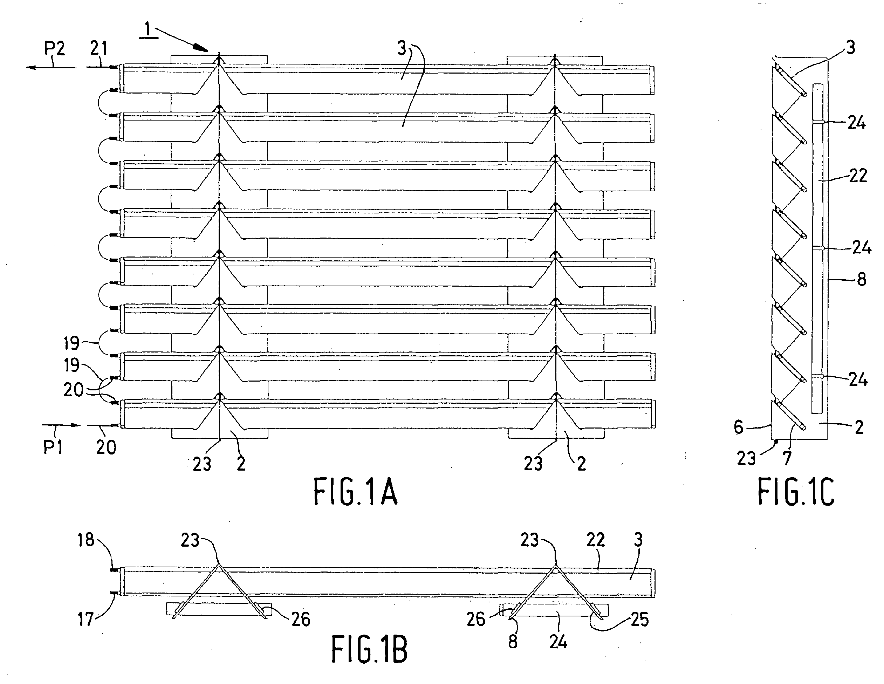

Each panel 3 comprises a plurality of parallel flow channels 9 (only schematically indicated in Fig. 6A), a first set of which opens into a fluid inlet chamber 11 with first ends 10 and into a fluid flow-through chamber 13 with the other ends 12. A second set of flow channels 9 opens into the fluid flow-through chamber 13 with first ends 14 and into a fluid outlet chamber 15 with second ends 15. The fluid flow-through chamber 13 forms a fluid outlet chamber for the first set of flow channels, at the same time forming a fluid inlet chamber for the first ends of the second set of flow channels. In this way the inlet chamber 11 and the outlet chamber 15 are located near the same end of each panel 3. The inlet chamber 11 and the outlet chamber 15 are separated by a partition 16 that is present inside the panel 3. The inlet chamber 11 and the outlet chamber 15 are provided with connecting elements 17, 18 for connection to a fluid supply device and a fluid discharge device, respectively. As Fig. 1A clearly shows, successive panels 3 are interconnected by hoses 19, each hose 19 being connected to a fluid outlet chamber of one panel 3 and to a fluid inlet chamber of the next panel 3 by means of a flexible coupling 20. A first panel 3 is connected to a fluid line 20 via the fluid inlet chamber, via which fluid line 20 a fluid, such as a water or glycol, is pumped into the panel 3 in the direction indicated by the arrow P1 by means of a pump (not shown). A last panel 3 is connected, via the fluid outlet chamber, to a fluid line 21 for transporting the fluid that has been heated by means of the solar collector 1 to a desired location. As is clearly shown in Figs. 1A and 1C, the panels 3 are positioned in the slots 7 of the holder 2, with the panels 3 including the same angle with the bottom side 8 of the holder 2 as the slots 7. A U-shaped aluminium strip 22 (see Figs. 5A, 5B) is positioned over a longitudinal side of the panel 3 remote from the bottom side 8 of the holder 2 for the purpose of strengthening the panels 3 of plastic material. To lock the panels 3 in position in the holder 2, a locking bar 23 (Fig. 4) is passed through the space bounded by the panels 3 and the fold line 6 of the holder 2, so that the panels 3 are firmly connected to the holder 2. To ensure that the holders 2 are adequately anchored to a supporting surface, the solar collector 1 is provided with three supports 24 (Fig. 3) for each holder 2, each support 24 being provided with slots 25. Cross slats 26 (Fig. 2) are positioned in the slots 25, beside the ends 8 of the holder 2, which cross slats function to provide greater rigidity.

The magnitude of the angle α will be determined in dependence on the desired application. The angle that the panels 3 include with the supporting surface can be further varied by means of the adjusting mechanism that is shown in Figs. 8A-8B, which adjusting mechanism comprises an adjusting plate 27 and a number of slots 28 present therein. The holders 2 are provided with a pin 29 near one end, which pin can be inserted into a desired recess 28, thus making it possible to position the relevant end of the holder 2 at a desired distance from a supporting surface and to adjust the angle that the panel 3 includes with the supporting surface. Preferably, the solar collector 1 is positioned in such a manner with respect to a selected position of the sun that a right angle of incidence of the sunrays on the surface of the panels 3 is obtained in that position of the sun.

When the solar collector 1 is used for heating a swimming pool, the water of the swimming pool can be carried into the solar collector in the direction indicated by the arrow P1 by means of a pump, after which the heated water can carried to the swimming pool again in the direction indicated by the arrow P2 via the pipe 21. It is also possible, however, to use glycol as the fluid in the solar collector 1, in which case the heat stored in the glycol is transferred to water, for example swimming pool water, via a heat exchanger.

When the solar collector 1 no longer needs to be used at a particular location, the hoses 19 are disconnected from the connections 17, 18 by means of the couplings 20. Subsequently, the locking bars 23 are removed, the panels 3 are lifted from the holders 2 and the holders 2 are disconnected from the supports 25. The individual parts can readily be stored or be transported to a different location.

The solar collector 1 according to the invention is relatively easy to assemble and comprises parts that are comparatively easy to manufacture, as a result of which the solar collector 1 is comparatively inexpensive. The number of panels can readily be decreased or increased in dependence on the desired heat output.

## Claims

1. A solar collector provided with a number of plate-shaped panels, which panels each comprise a plurality of flow channels arranged in parallel, side-by-side relationship, which open into a fluid inlet chamber with first ends and which open into a fluid outlet chamber with second ends, said fluid inlet chamber and said fluid outlet chamber being provided with connecting elements for connection to a fluid supply device and a fluid discharge device, **characterized in that** the solar collector is furthermore provided with at least one holder comprising a number of slots extending parallel to each other, in each of which a panel can be detachably mounted, which panels can be detachably interconnected in fluid communication with each other.

2. A solar collector according to claim 1, **characterized in that** the slots extend at an angle with respect to a bottom side of the holder.

3. A solar collector according to claim 1 or 2, **characterized in that** the panels are interconnected in fluid communication by means of hoses, which hoses are connected to the panels by means of detachable connections.

4. A solar collector according to any one of the preceding claims, **characterized in that** the solar collector is provided with at least one adjusting mechanism, by means of which the distance between one end of the holder and a supporting surface is adjustable.

5. A solar collector according to any one of the preceding claims, **characterized in that** the holder comprises an elongated plate provided with V-shaped recesses, which plate is folded about a fold line that extends through points of the V-shaped recesses, said recesses forming slots in which the panels can be detachably mounted.

6. A solar collector according to claim 5, **characterized in that** a locking bar extending parallel to the fold line is present between the panels and the fold line.

7. A solar collector according to either one of the preceding claims 5-6, **characterized in that** edges of the elongated plate are positioned in supports on a side remote from the fold line.

8. A solar collector according to any one of the preceding claims, **characterized in that** the angle that the slots include with a supporting surface is adjustable.

9. A solar collector according to any one of the preceding claims, **characterized in that** said fluid is water or glycol.

10. A solar collector according to any one of the preceding claims, **characterized in that** the plurality of flow channels lying side by side form two sets, wherein the second ends of a first set open into a fluid flow-through chamber, into which also the first ends of the second set open, whilst said fluid inlet chamber and said fluid outlet chamber are located on a side of the flow channels remote from the fluid flow-through chamber.
